# EUROPÄISCHE PATENTSCHRIFT

(11) **EP 1 174 428 B1**
(45) Veröffentlichungstag und Bekanntmachung des Hinweises auf die Patenterteilung: **29.10.2003**
(21) Anmeldenummer: 01115718.7
(22) Anmeldetag: 06.07.2001
(51) Int. Cl.: C07D 229/00, C07D 251/34, C08G 18/79

(54) **Verfahren zur Herstellung von Uretdionpolysocyanaten mit verbesserter Monomerenstabilität**
Process for the preparation of uretdione polyisocyanates with improved monomer stability
Procédé de préparation de polyisocyanates contenant des groupes uretdione et ayant une stabilité améliorée de monomères

(30) Priorität: 19.07.2000 DE 10035013
(43) Veröffentlichungstag der Anmeldung: 23.01.2002
(73) Patentinhaber: Bayer Aktiengesellschaft, 51368 Leverkusen (DE)
(72) Erfinder: Laas, Hans-Josef, Dr., 51467 Bergisch Gladbach (DE); Halpaap, Reinhard, Dr., 51519 Odenthal (DE); Mager, Dieter, 51373 Leverkusen (DE)

(56) Entgegenhaltungen:
- EP-A- 0 173 252
- EP-A- 0 481 318
- DE-A- 1 934 763

## Beschreibung

Die Erfindung betrifft ein Verfahren zur Herstellung von Uretdionpolyisocyanaten mit verbesserter Lagerstabilität sowie deren Verwendung als Ausgangskomponente für Polyurethankunststoffe, insbesondere als Vernetzerkomponente zur Herstellung von Zweikomponenten-Polyurethanlacken.

Die Herstellung von Uretdiongruppen aufweisenden Polyisocyanaten durch katalytische Dimerisierung und gegebenenfalls gleichzeitige Trimerisierung (Oberbegriff: Oligomerisierung) monomerer aliphatischer oder cycloaliphatischer Diisocyanate ist bekannt. Die Vor- und Nachteile der unterschiedlichen Dimerisierungskatalysatoren bzw. -katalysatorsysteme sind in der Literatur ausführlich diskutiert (vgl. z. B. *J. prakt*. *Chem.* 336 (1994) 185 - 200, EP-A 569 804, EP-A 572 995, EP-A 645 411, EP-A 780 377, US-A 5 315 004, US-A 5 461 135, WO 97/45399 und WO 99/07765).

Für die industrielle Praxis haben heute tert.-Phosphine, wie z. B. Tributylphosphin, als Dimerisierungskatalysatoren die größte Bedeutung. Mit ihrer Hilfe lassen sich im technischen Maßstab farbhelle, Uretdiongruppen enthaltende Polyisocyanate herstellen, die sich durch außerordentlich niedrige Viskositäten auszeichen und infolgedessen bevorzugt als Vernetzerkomponenten für lösemittelarme "high-solids"-Lacke oder sogar völlig lösemittelfreie Beschichtungen Verwendung finden.

Ein wesentlicher Nachteil der durch Katalyse mit tert.-Phosphinen hergestellten Uretdionpolyisocyanate ist jedoch ihre ungenügende Stabilität hinsichtlich einer Rückspaltung in die freien Diisocyanate. Aufgrund ihres spezifischen Nebenproduktspektrums neigen diese Produkte bei Wärmelagerung bereits bei Temperaturen unterhalb der Aufspalttemperatur der als thermolabil bekannten Uretdionstrukturen, beispielsweise bereits bei 50°C, in erheblichem Maße zur Freisetzung monomerer Ausgangsdiisocyanate. Die bei Lackpolyisocyanaten für eine gefahrlose Handhabung einzuhaltende Grenzkonzentration an flüchtigen monomeren Diisocyanaten von 0,5 Gew.-% wird unter solchen Bedingungen im allgemeinen bereits nach wenigen Tagen, spätestens aber nach 3 bis 4 Wochen überschritten.

Aufgabe der vorliegenden Erfindung war es nun, ein neues verbessertes Dimerisierungsverfahren zur Verfügung zu stellen, das unter Verwendung der bekannten tert.-Phosphine als Katalysatoren Uretdionpolyisocyanate liefert, in denen auch bei längerer Wärmelagerung der Gehalt an monomeren Ausgangsdiisocyanaten nicht merklich ansteigt. Diese Aufgabe konnte nun durch die Bereitstellung des erfindungsgemäßen Verfahrens gelöst werden.

Gegenstand der vorliegenden Erfindung ist ein Verfahren zur Herstellung Uretdiongruppen enthaltender Polyisocyanate durch tert.-Phosphin-katalysierte Oligomerisierung, gegebenenfalls in Gegenwart eines Cokatalysators, eines Teils der Isocyanatgruppen von Diisocyanaten mit aliphatisch und/oder cycloaliphatisch gebundenen Isocyanatgruppen, Abbruch der Oligomerisierungsreaktion bei einem gewünschten Oligomerisierungsgrad und Entfernung des nicht umgesetzten Diisocyanatüberschusses durch Extraktion oder Dünnschichtdestillation, dadurch gekennzeichnet, daß man die Oligomerisierungsreaktion in Gegenwart von Harnstoffen der allgemeinen Formel **(I)** und/oder Amiden der allgemeinen Formel **(II)** 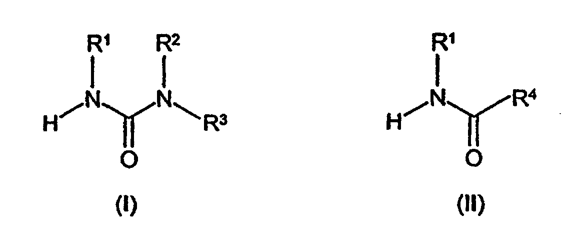 durchführt, in welchen
- R¹, R² und R³: für gleiche oder verschiedene Reste stehen und jeweils ein Wasserstoffatom, einen gesättigten oder ungesättigten aliphatischen oder cycloaliphatischen, einen gegebenenfalls substituierten aromatischen oder araliphatischen Rest bedeuten, der bis zu 18 Kohlenstoffatome und gegebenenfalls bis zu 3 Heteroatome aus der Reihe Sauerstoff, Schwefel, Stickstoff enthalten kann,
- R⁴: die für R¹ bis R³ angegebene Bedeutung hat oder für einen Rest 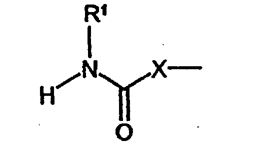 steht, in welchem X einen zweibindigen gegebenenfalls verzweigten aliphatischen oder cycloaliphatischen Rest mit bis zu 12 Kohlenstoffatomen bedeutet, R¹ die oben bei Formel I angegebene Bedeutung hat und wobei
- R¹, R² und R³: in Formel **(I)** und
- R¹ und R⁴: in Formel **(II)** auch in Kombination untereinander zusammen mit den Stickstoffatomen der Harnstoff- oder Amidgruppe und gegebenenfalls einem weiteren Stickstoffatom oder einem Sauerstoffatom heterocyclische Ringe mit 3 bis 6 Kohlenstoffatomen bilden können.

Gegenstand der Erfindung ist auch die Verwendung der nach diesem Verfahren hergestellten Uretdiongruppen enthaltenden Polyisocyanate als Ausgangskomponente bei der Herstellung von Polyurethankunststoffen, insbesondere, gegebenenfalls in mit Blockierungsmitteln blockierter Form, als Vernetzerkomponente für Lackbindemittel oder Lackbindemittelkomponenten mit gegenüber Isocyanatgruppen reaktionsfähigen Gruppen.

Ausgangsverbindungen für das erfindungsgemäße Verfahren sind durch Phosgenierung oder nach phosgenfreien Verfahren, beispielsweise durch thermische Urethanspaltung, zugängliche Diisocyanate mit aliphatisch und/oder cycloaliphatisch gebundenen Isocyanatgruppen, insbesondere solche des Molekulargewichtsbereichs 140 bis 400, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norboman und 1,3- und 1,4-Bis-(2-isocyanato-prop-2-yl)-benzol (TMXDI) sowie Gemische solcher Diisocyanate. Bevorzugte Ausgangsverbindungen sind HDI und/oder IPDI.

Geeignete Katalysatoren für das erfindungsgemäßen Verfahrens sind tertiäre organische Phosphine der allgemeinen Formel (III) 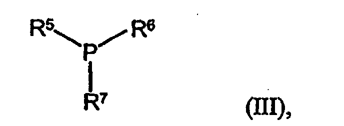 in welcher
- R⁵, R⁶ und R⁷: für gleiche oder verschiedene Reste stehen und jeweils eine Alkyloder Cycloalkylgruppe mit bis zu 10, vorzugsweise 2 bis 8 Kohlenstoffatomen, eine Aralkylgruppe mit 7 bis 10, vorzugsweise mit 7 Kohlenstoffatomen oder eine gegebenenfalls alkylsubstituierte Arylgruppe mit 6 bis 10, vorzugsweise 6 Kohlenstoffatomen bedeuten, mit der Maßgabe, daß höchstens einer der Reste für eine Arylgruppe und mindestens einer der Reste für eine Alkyl- oder Cycloalkylgruppe steht, oder in welcher
- R⁵ und R⁶: aliphatischer Natur sind und, miteinander verknüpft, zusammen mit dem Phosphoratom einen heterocylischen Ring mit 4 bis 6 Ringgliedem bilden, wobei R⁷ für eine Alkylgruppe mit bis zu 4 Kohlenstoffatomen steht,
oder Gemische solcher tertiären Phosphine.

Geeignete tert.-Phosphine sind beispielsweise Triethylphosphin, Dibutylethylphosphin, Tri-n-propylphosphin, Triisopropylphosphin, Tri-tert.-butylphosphin, Tribenzylphosphin, Dicyclopentylbutylphosphin, Tricyclopentylphosphin, Benzyldimethylphosphin, Dimethylphenylphosphin, Tri-n-butylphosphin, Triisobutylphosphin, Triamylphosphin, Trioctylphosphin oder Butyl-phosphacyclopentan.

Bevorzugt kommen beim erfindungsgemäßen Verfahren als Katalysatoren die genannten Trialkylphosphine zum Einsatz. Ganz besonders bevorzugte Katalysatoren sind Tributylphosphin und/oder Trioctylphosphin.

Diese Katalysatoren werden im allgemeinen in einer Menge von 0,01 bis 5 Gew.-%, vorzugsweise 0,1 bis 3 Gew.-%, bezogen auf die Menge des eingesetzten Ausgangsdiisocyanates, eingesetzt.

Gegebenenfalls können neben den genannten Katalysatoren beim erfindungsgemäßen Verfahren geeignete Co-Katalysatoren mitverwendet werden. Als Co-Katalysatoren geeignet sind insbesondere niedermolekulare, ein- oder mehrwertige aliphatische Alkohole, vorzugsweise solche des Molekulargewichtsbereiches 32 bis 200, wie z. B. Methanol, Ethanol, n-Propanol, Isopropanol, n-Butanol, n-Hexanol, 2-Ethyl-1-hexanol, 1-Methoxy-2-propanol, Ethylenglykol, Propylenglykol, die isomeren Butandiole, Hexandiole, oder Octandiole, Diethylenglykol, Dipropylenglykol, 2-Ethyl-1,3-hexandiol, 2,2,4-Trimethylpentandiol, Glycerin, Trimethylolpropan oder Gemische derartiger Alkohole.

Diese Co-Katalysatoren kommen beim erfindungsgemäßen Verfahren, falls überhaupt, in Mengen von bis zu 5 Gew.-%, vorzugsweise von 0,5 bis 3 Gew.-%, bezogen auf die Menge an eingesetztem Ausgangsdiisocyanat, zum Einsatz.

Die durch Reaktion der beim erfindungsgemäßen Verfahren gegebenfalls mitzuverwendenden Co-Katalysatoren mit dem Ausgangsdiisocyanat gebildeten Urethane stellen die eigentlichen Co-Katalysatoren dar. Hieraus folgt, daß prinzipiell anstelle der beispielhaft genannten Alkohole auch deren separat durch Umsetzung mit Isocyanaten erhaltene Urethane als Co-Katalysatoren geeignet sind.

Erfindungsgemäß wird die Oligomerisierungsreaktion in Gegenwart spezieller Stabilisatoren durchgeführt. Hierbei handelt es sich um an sich bekannte Harnstoffe der allgemeinen Formel **(I)** und/oder Amide der allgemeinen Formel **(II)** 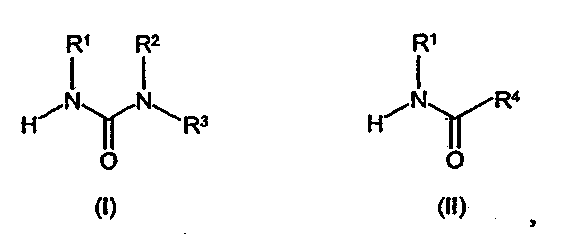 in welchen
- R¹, R² und R³: für gleiche oder verschiedenen Reste stehen und jeweils ein Wasserstoffatom, einen gesättigten oder ungesättigten aliphatischen oder cycloaliphatischen, einen gegebenenfalls substituierten aromatischen oder araliphatischen Rest bedeuten, der bis zu 18 Kohlenstoffatome und gegebenenfalls bis zu 3 Heteroatome aus der Reihe Sauerstoff, Schwefel, Stickstoff enthalten kann,
- R⁴: die für R¹ bis R³ angegebene Bedeutung hat oder für einen Rest 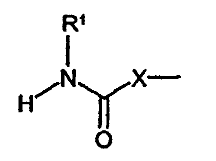 steht, in welchem X einen zweibindigen gegebenenfalls verzweigten aliphatischen oder cycloaliphatischen Rest mit bis zu 12 Kohlenstoffatomen bedeutet, R¹ die oben bei Formel I angegebene Bedeutung hat und wobei
- R¹, R² und R³: in Formel **(I)** und
- R¹ und R⁴: in Formel **(II)** auch in Kombination untereinander zusammen mit den Stickstoffatomen der Harnstoff- oder Amidgruppe und gegebenenfalls einem weiteren Stickstoffatom oder einem Sauerstoffatom heterocyclische Ringe mit 3 bis 6 Kohlenstoffatomen bilden können.

Bevorzugte Stabilisatoren mit Harnstoffstruktur sind dabei solche der allgemeinen Formel **(I)**, in welcher
- R¹, R² und R³: für gleiche oder verschiedenen Reste stehen und jeweils ein Wasserstoffatom oder einen gesättigten oder ungesättigten aliphatischen oder cycloaliphatischen Rest mit bis zu 12 Kohlenstoffatomen bedeuten, und wobei
- R¹, R² und R³: auch in Kombination untereinander zusammen mit mindestens einem Stickstoffatom der Harnstoffgruppe und gegebenenfalls einem weiteren Stickstoffatom oder einem Sauerstoffatom heterocyclische Ringe mit 3 bis 6 Kohlenstoffatomen bilden können.

Ganz besonders bevorzugte Harnstoffe sind solche der allgemeinen Formel **(I)**, in welcher
- R¹: für ein Wasserstoffatom und
- R² und R³: jeweils für ein Wasserstoffatom oder einen gesättigten aliphatischen oder cycloaliphatischen Rest mit bis zu 8 Kohlenstoffatomen stehen.

Bevorzugte Stabilisatoren mit Amidstruktur sind solche der der allgemeinen Formel **(II),** in welcher
- R¹: für ein Wasserstoffatom oder einen gesättigten aliphatischen oder cycloaliphatischen oder einen gegebenenfalls substituierten aromatischen Rest mit bis zu 12 Kohlenstoffatomen steht,
- R⁴: die für R¹ angegebene Bedeutung hat oder für einen Rest 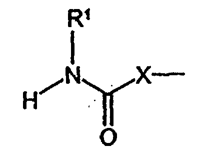 steht, in welchem X einen zweibindigen gegebenenfalls verzweigten aliphatischen oder cycloaliphatischen Rest mit bis zu 6 Kohlenstoffatomen bedeutet und R¹ die angegebene Bedeutung hat, und wobei
- R¹ und R⁴: auch zusammen mit dem Stickstoffatom der Amidgruppe und gegebenenfalls einem weiteren Stickstoffatom oder einem Sauerstoffatom heterocyclische Ringe mit 3 bis 6 Kohlenstoffatomen bilden können.

Besonders bevorzugte Amide sind solche der allgemeinen Formel **(II)**, in welcher
- R¹: für ein Wasserstoffatom oder einen gesättigten aliphatischen Rest mit 1 bis 4 Kohlenstoffatomen und
- R⁴: für einen gegebenenfalls substituierten aromatischen Rest mit 1 bis 12 Kohlenstoffatomen steht,
solche der allgemeinen Formel **(II)**, in welcher
- R¹ und R⁴: zusammen mit dem Stickstoffatom der Amidgruppe und gegebenenfalls einem weiteren Stickstoffatom oder einem Sauerstoffatom einen heterocyclischen Ring mit 3 bis 6 Kohlenstoffatomen bildet
oder solche der allgemeinen Formel **(II)**, in welcher
- R¹: für ein Wasserstoffatom und
- R⁴: für einen Rest 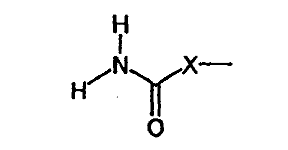 steht, in welchem X einen zweibindigen aliphatischen Rest mit bis zu 4 Kohlenstoffatomen bedeutet.

Geeignete Stabilisatoren für das erfindungsgemäße Verfahren sind beispielsweise Harnstoff, oder substituierte Harnstoffe, wie z. B. N-Methylharnstoff, N-Ethylharnstoff, N-n-Butylharnstoff, N-tert.-Butylharnstoff, N-(1-Adamantyl)-harnstoff, N-Allylharnstoff, N-Phenylharnstoff, N-Benzylharnstoff, N,N-Dimethylharnstoff, N,N-Diethylharnstoff, N,N-Di-n-butylharnstoff, N,N-Diphenylharnstoff, N-(2-Benzimidazolyl)-harnstoff, N,N'-Dimethylharnstoff, N,N'-Diethylharnstoff, N,N'-Dibutylharnstoff, N,N'-Dicyclohexylharnstoff, N,N'-Diallylharnstoff, N,N'-Diphenylharnstoff, N,N'-Ethylenharnstoff und N,N'-Propylenharnstoff, oder Amide, wie z.B. Formamid, Acetamid, Propionsäureamid, Buttersäureamid, Stearinsäureamid, N-Methylformamid, N-Phenylformamid, N-(4-Methylphenyl)-formamid, Cyanamid, N-Methylacetamid, Cyanacetamid, N-Phenylacetamid, N-(4-Methylphenyl)-acetamid, N-(4-Methoxyphenyl)-acetamid, N-(2-Ethoxy-1-naphthyl)-acetamid, Acrylsäureamid, Methacrylsäureamid, N-Methoxymethylmethacrylamid, Benzoesäureamid, 3-Methylbenzoesäureamid, 3-Methoxybenzoesäureamid, Acetessigsäurebenzylamid, N-Phenylbenzamid, Salicylamid, Oxalsäurediamid, Malonsäurediamid, Bernsteinsäurediamid, Glutarsäurediamid, Adipinsäurediamid, Fumarsäurediamid, N,N-Methylendiacrylamid, 4-Methoxyphthalsäurediamid, Nicotinsäureamid, Isonicotinsäureamid, 3,5-Dimethylpyrazol-1-carbonsäureamid, 2-Pyrrolidinon, 2-Piperidinon (δ-Valerolactam) und/oder ε-Caprolactam.

Bevorzugte Stabilisatoren sind N-Methylharnstoff, N-Ethylharnstoff, N-n-Butylharnstoff, N,N-Dimethylharnstoff, N,N-Diethylharnstoff, N,N-Di-n-butylharnstoff, Acetamid, Oxalsäurediamid, Malonsäurediamid, Bernsteinsäurediamid, Glutarsäurediamid, und/oder Adipinsäurediamid. Ganz besonders bevorzugt sind N,N-Dimethylhamstoff und/oder N,N-Diethylharnstoff.

Diese Stabilisatoren kommen beim erfindungsgemäßen Verfahren in der Regel in Mengen von 0,01 bis 2 Gew.-%, vorzugsweise von 0,05 bis 1 Gew.-% und besonders bevorzugt von 0,1 bis 0,5 Gew.-%, bezogen auf die Menge an eingesetztem Ausgangsdiisocyanat, zum Einsatz.

Gegebenenfalls wird die Oligomerisierungsreaktion beim erfindungsgemäßen Verfahren beim gewünschten Umsatzgrad, beispielsweise wenn 10 bis 60 % der ursprünglich im Ausgangsgemisch vorliegenden Isocyanatgruppen abreagiert haben, mit Hilfe geeigneter Katalysatorgifte abgebrochen. Solche Katalysatorgifte stellen beispielsweise Alkylierungsmittel wie Dimethylsulfat oder p-Toluolsulfonsäuremethylester, Acylierungsmittel wie Benzoylchlorid, Säuren wie Perfluorbutansulfonsäure, Schwefel oder Sulfonylisocyanate dar, wie sie in der US-A 4 614 785, Kolonne 5, Zeile 27 bis Kolonne 6, Zeile 35 beispielhaft genannt sind, aber auch silylierte Säuren z.B. der in der EP-A 520 210 genannten Art.

Die zur Abstoppung der Reaktion benötigte Menge des Katalysatorgiftes richtet sich dabei nach der Menge des verwendeten Katalysators; im allgemeinen wird eine äquimolare Menge des Abstoppers, bezogen auf den zu Beginn eingesetzten Dimerisierungskatalysator, eingesetzt. Berücksichtigt man allerdings eventuell während der Reaktion auftretende Katalysatorverluste, so können zur Reaktionsstoppung auch schon 20 bis 80 Äquivalent-% des Katalysatorgiftes, bezogen auf die ursprünglich eingesetzte Katalysatormenge, ausreichen.

Das erfindungsgemäße Verfahren wird vorzugsweise in Substanz durchgeführt. Es kann aber auch in Gegenwart von gegenüber Isocyanatgruppen inerten Lösungsmitteln durchgeführt werden. Geeignete Lösungsmittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-nbutylacetat, Aceton, 2-Butanon, Methylisobutylketon, 4-Methyl-2-pentanon, Cyclohexanon, Hexan, Toluol, Xylol, Chlorbenzol, Testbenzin, höher substituierte Aromaten, wie sie beispielsweise unter den Bezeichnungen Solventnaphtha® Solvesso®, Shellsol®, Isopar®, Nappar® und Diasol® im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton und ε-Caprolacton, aber auch Lösemittel wie Ethylglykolacetat, Propylenglykolmonomethyletheracetat, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische derartiger Lösemittel.

Zur Durchführung des erfindungsgemäßen Verfahrens wird das Ausgangsdiisocyanat bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art auf eine Temperatur zwischen 20 und 100°C, vorzugsweise 20 bis 70°C erwärmt. Im Anschluß hieran wird ein tertiäres Phosphin der oben beispielhaft genannten Art in der oben angegebenen Menge als Dimerisierungskatalysator zugegeben und die Reaktionstemperatur gegebenenfalls durch eine geeignete Maßnahme (Heizen oder Kühlen) auf eine Temperatur von 20 bis 120°C, vorzugsweise von 25 bis 80°C eingestellt. Die Zugabe der Harnstoff- bzw. Amid-Stabilisatoren sowie der gegebenenfalls mitzuverwendenden alkoholischen Co-Katalysatoren zum Reaktionsgemisch kann beim erfindungsgemäßen Verfahren in beliebiger Reihenfolge und zu jedem beliebigen Zeitpunkt der Umsetzung erfolgen. Beispielsweise können Stabilisatoren und gegebenenfalls Co-Katalysatoren bereits dem Ausgangsdiisocyanat zugesetzt werden, beide Komponenten können z. B. aber auch erst im Anschluß an den Oligomerisierungskatalysator zugegeben werden. Bevorzugt werden die Stabilisatoren, bei denen es sich häufig um bei Raumtemperatur feste Verbindungen handelt, zur Vereinfachung der Handhabung dem Reaktionsgemisch in gelöster Form, beispielsweise in einem der oben genannten Lösungsmittel, insbesondere aber in einem als Lösungsmittel geeigneten alkoholischen Co-Katalysator, zudosiert.

Die Umsetzung kann gegebenenfalls bei Erreichen eines Oligomerisierungsgrades von 10 bis 60 %, vorzugsweise 10 bis 40 % durch Zugabe eines Katalysatorgiftes der beispielhaft genannten Art und gegebenfalls nachfolgendes kurzzeitiges Erhitzen der Reaktionsmischung auf eine oberhalb 80°C, vorzugsweise oberhalb 120°C liegende Temperaturen beendet werden. Unter "Oligomerisierungsgrad" ist dabei der Prozentsatz der in der Ausgangsmischung ursprünglich vorhandenen Isocyanatgruppen zu verstehen, der während der erfindungsgemäßen Umsetzung (insbesondere durch Dimerisierung, daneben unter Trimerisierung und im Falle der Mitverwendung der beschriebenen, beispielsweise alkoholischen Co-Katalysatoren durch Reaktion mit Isocyanatgruppen, beispielsweise unter Urethanisierung) verbraucht wird. Der genannte Oligomerisierungsgrad wird im allgemeinen nach einer Reaktionszeit von 1 bis 48, vorzugsweise 2 bis 24 Stunden erreicht.

Vorzugsweise wird das Reaktionsgemisch anschließend durch Dünnschichtdestillation im Hochvakuum unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten und gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten und gegebenenfalls mitverwendeten Lösungsmitteln bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art und dem Zeitpunkt der Stabilisatorzugabe erhält man auf diese Weise farbhelle, in Abhängigkeit von der Art des eingesetzten Ausgangsdiisocyanates bei Raumtemperatur flüssige oder hochviskose, Uretdiongruppen aufweisende Polyisocyanatgemische mit einem Gehalt an aliphatisch und/oder cycloaliphatisch gebundenen Isocyanatgruppen von 10 bis 30 Gew.-%, vorzugsweise von 15 bis 25 Gew.-%, die im allgemeinen weniger als 1 Gew.-%, vorzugsweise weniger als 0,5 Gew.-%, besonders bevorzugt weniger als 0,3 Gew.-% an monomeren Ausgangsdiisocyanaten enthalten.

Im Vergleich zu Uretdionpolyisocyanaten, die nach Dimerisierungsverfahren des Standes der Technik unter tert.-Phosphin-Katalyse aber ohne den Zusatz der erfindungswesentlichen Harnstoff- und/oder Amidstabilisatoren hergestellt wurden, fallen die erfindungsgemäßen Verfahrensprodukte nach Monomerenabtrennung durch Dünnschichtdestillation unter vergleichbaren Destillationsbedingungen bereits mit einem deutlich niedrigeren Restmonomerengehalt an und zeichnen sich darüberhinaus durch eine erheblich verbesserte Rückspaltstabilität aus. Auch nach mehrwöchiger Wärmelagerung bei 50°C steigt der Gehalt an Restmonomeren in erfindungsgemäß hergestellten Uretdionpolyisocyanaten nur unwesentlich an. Das erfindungsgemäße Verfahren gestattet so auf einfache Weise die Herstellung Uretdiongruppen enthaltender Polyisocyanate, in denen auch bei längerer Lagerung die für eine gefahrlose Handhabung einzuhaltende Grenzkonzentration an flüchtigen monomeren Diisocyanaten von 0,5 Gew.-% nicht überschritten wird.

Die erfindungsgemäßen Verfahrensprodukte stellen wertvolle Ausgangsmaterialien zur Herstellung von Polyurethankunststoffen nach dem Polyadditionsverfahren dar. Sie eignen sich insbesondere, gegebenenfalls in mit Blockierungsmitteln blockierter Form, als Vernetzerkomponente für Lackbindemittel oder Lackbindemittelkomponenten mit gegenüber Isocyanatgruppen reaktionsfähigen Gruppen bei der Herstellung von Ein- oder Zweikomponenten-Polyurethanlacken oder -klebstoffen.

### Beispiele

Alle Prozentangaben beziehen sich, soweit nichts anderslautendes vermerkt, auf das Gewicht.

### Beispiel 1

1000 g (5,95 mol) Hexamethylendiisocyanat (HDI) werden bei Raumtemperatur unter trockenem Stickstoff nacheinander mit 2 g (0,2 %) N,N-Diethylharnstoff als Stabilisator, 10 g (1,0 %) 1,3-Butandiol als Co-Katalysator sowie 3 g (0,3 % / 0,015 mol) Tri-n-butylphosphin als Katalysator versetzt und anschließend auf 60°C erwärmt. Nach einer Reaktionszeit von 4 Stunden beträgt der NCO-Gehalt des Reaktionsgemisches 40,4 %, entsprechend einem Oligomerisierungsgrad von 18,0 %. Die Reaktion wird durch Zugabe von 2,8 g (0,015 mol) p-Toluolsulfonsäuremethylester und einstündiges Erhitzen auf 80°C abgestoppt. Nach Dünnschichtdestillation bei einer Temperatur von 130°C und einem Druck von 0,15 mbar erhält man ein farbloses uretdiongruppenhaltiges Polyisocyanat mit einem NCO-Gehalt von 21,4 %, einem Gehalt an monomerem HDI von 0,07 % und einer Viskosität (nach DIN 53 018) von 185 mPas (23°C).

Zum Vergleich wird auf analoge Weise jedoch ohne Mitverwendung von N,N-Diethylharnstoff ein HDI-Polyisocyanat hergestellt. Das nach Dünnschichtdestillation bei 130°C und 0,15 mbar anfallende praktisch farblose Harz weist einen NCO-Gehalt von 21,5 %, einen Gehalt an monomerem HDI von 0,33 % und eine Viskosität (nach DIN 53 018) von 190 mPas (23°C) auf.

Beide Polyisocyanate wurden anschließend bei 50 °C gelagert. Dabei wurden im Abstand von jeweils 7 Tagen (d) die Gehalte an monomerem HDI bestimmt. Die nachfolgende Tabelle zeigt die gefundenen Werte.

| | **Polyisocyanat, erfindungsgemäß** | | **Vergleichspolyisocyanat** | |
|---|---|---|---|---|
| | **HDI [%]** | **Δ**^{**a)**} **[%]** | **HDI [%]** | **Δ**^{**a)**} **[%]** |
| Start | 0,07 | - | 0,33 | - |
| 7 d | 0,13 | 0,06 | 0,55 | 0,23 |
| 14 d | 0,15 | 0,08 | 0,61 | 0,28 |
| 21 d | 0,24 | 0,17 | 0,64 | 0,31 |
| 28 d | 0,26 | 0,19 | 0,67 | 0,34 |
| 35 d | 0,28 | 0,21 | 0,71 | 0,38 |

| | | | | |
|---|---|---|---|---|
| ^{a)} Differenz zum Ausgangsgehalt an monomerem HDI | | | | |

Der Vergleich zeigt, daß das erfindungsgemäß in Gegenwart des Harnstoff-Stabilisators hergestellte Uretdionpolyisocyanat trotz gleicher Destillationsbedingungen bereits mit einem erheblich niedrigeren Monomerengehalt anfällt. Während der HDI-Gehalt des erfindungesgemäß hergestellten Polyisocyanates nach fünfwöchiger Lagerung bei 50 °C noch deutlich unter der 0,5 %-Grenze liegt, wird dieser Wert bei dem ohne Stabilisatorzusatz hergestellten Vergleichsprodukt bereits nach 7 Tagen überschritten.

### Beispiele 2 - 8

Nach dem in Beispiel 1 beschriebenen Verfahren wurden ausgehend von HDI unter Verwendung unterschiedlicher Stabilisatoren Uretdionpolyisocyanate hergestellt. Zur besseren Handhabung wurden die Stabilisatoren dabei jeweils in Form einer Lösung im alkoholischen Cokatalysator 1,3-Butandiol eingesetzt. Der Oligomerisierungsgrad betrug in allen Fällen zwischen 18 und 19 %. Die nachfolgende Tabelle zeigt Art und Menge der eingesetzten Stabilisatoren (jeweils bezogen auf die Menge an eingesetztem Ausgangsdiisocyanat) sowie Kenndaten und Lagerstabilität der nach Dünnschichtdestillation erhaltenen Harze.

| **Bsp.** | **Stabilisator / Menge** | **NCO[%]** | **Viskosität [mPas]** | **monom. HDI [%]** | |
|---|---|---|---|---|---|
| | | | | **sofort** | **28 d/50 °C** |
| **2** | N,N-Diethylharnstoff/0,1 % | 21,5 | 180 | 0,07 | 0,21 |
| **3** | N,N-Diethylharnstoff/0,5 % | 21,5 | 180 | 0,14 | 0,35 |
| **4** | N,N-Dimethylharnstoff/0,2 % | 21,6 | 170 | 0,05 | 0,26 |
| **5** | N,N'Carbonyldiimidazol/0,2 % | 21,5 | 175 | 0,12 | 0,24 |
| **6** | Acetamid / 0,2 % | 21,6 | 170 | 0,09 | 0,31 |
| **7** | Malonsäurediamid / 0,2 % | 21,4 | 190 | 0,08 | 0,30 |
| **8** | 4-Methylbenzoesäureamid / 0,2 % | 21,4 | 205 | 0,08 | 0,29 |

### Beispiel 9

1000 g (4,50 mol) Isophorondiisocyanat (IPDI) werden bei Raumtemperatur unter trockenem Stickstoff nacheinander mit 2 g (0,2 %) N,N-Diethylharnstoff als Stabilisator und 10 g (1,0 % / 0,05 mol) Tri-n-butylphosphin als Katalysator versetzt und anschließend 40 h gerührt, bis der NCO-Gehalt des Reaktionsgemisches auf 32,9 %, entsprechend einem Oligomerisierungsgrad von 11,9 %, abgesunken ist. Die Reaktion wird durch Zugabe von 9,3 g (0,05 mol) p-Toluolsulfonsäuremethylester und halbstündiges Erhitzen auf 80°C abgestoppt. Nach Dünnschichtdestillation bei einer Temperatur von 160°C und einem Druck von 0,15 mbar erhält man ein hochviskoses, hellgelbes Uretdionpolyisocyanat mit einem NCO-Gehalt von 17,2 % und einem Gehalt an monomerem IPDI von 0,24 %.

Zum Vergleich wird auf analoge Weise jedoch ohne Mitverwendung von N,N-Diethylharnstoff ein IPDI-Polyisocyanat hergestellt. Das nach Dünnschichtdestillation anfallende hellgelbe Harz weist einen NCO-Gehalt von 17,3 % und einen Gehalt an monomerem IPDI von 0,27 % auf.

Beide Polyisocyanate wurden für 4 Wochen bei 50 °C gelagert, anschließend wurden die Gehalte an monomerem IPDI erneut bestimmt. Der Monomergehalt des erfindungsgemäß hergestellten Polyisocyanates stieg um 0,20 % auf 0,44 % an, der des Vergleichspolyisocyanates hingegen um 0,39 % auf 0,66 %.

## Patentansprüche

1. Verfahren zur Herstellung Uretdiongruppen enthaltender Polyisocyanate durch tert.-Phosphin-katalysierte Oligomerisierung, gegebenenfalls in Gegenwart eines Cokatalysators, eines Teils der Isocyanatgruppen von Diisocyanaten mit aliphatisch und/oder cycloaliphatisch gebundenen Isocyanatgruppen, Abbruch der Oligomerisierungsreaktion bei einem gewünschten Oligomerisierungsgrad und Entfernung des nicht umgesetzten Diisocyanatüberschusses durch Extraktion oder Dünnschichtdestillation, **dadurch gekennzeichnet, daß** man die Oligomerisierungsreaktion in Gegenwart von Harnstoffen der allgemeinen Formel **(I)** und/oder Amiden der allgemeinen Formel **(II)** 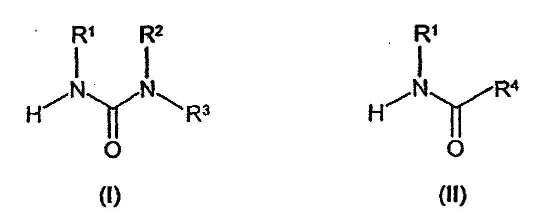 durchführt, in welchen
R¹, R² und R³ für gleiche oder verschiedene Reste stehen und jeweils ein Wasserstoffatom, einen gesättigten oder ungesättigten aliphatischen oder cycloaliphatischen, einen gegebenenfalls substituierten aromatischen oder araliphatischen Rest bedeuten, der bis zu 18 Kohlenstoffatome und gegebenenfalls bis zu 3 Heteroatome aus der Reihe Sauerstoff, Schwefel, Stickstoff enthalten kann,
R⁴ die für R¹ bis R³ angegebene Bedeutung hat oder für einen Rest 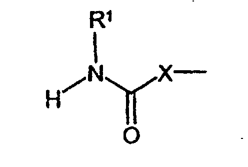 steht, in welchem X einen zweibindigen gegebenenfalls verzweigten aliphatischen oder cycloaliphatischen Rest mit bis zu 12 Kohlenstoffatomen bedeutet, und R¹ die oben angegebene Bedeutung hat, und wobei
R¹, R² und R³ in Formel **(I)** und
R¹ und R⁴ in Formel **(II)** auch in Kombination untereinander zusammen mit den Stickstoffatomen der Harnstoff oder Amidgruppe und gegebenenfalls einem weiteren Stickstoffatom oder einem Sauerstoffatom heterocyclische Ringe mit 3 bis 6 Kohlenstoffatomen bilden können.

2. Verfahren gemäß Anspruch 1, **dadurch gekennzeichnet, daß** man als Ausgangsdiisocyanate 1,6-Diisocyanatohexan und/oder 1-Isocyanato-3,3,5-trimethyl-5-isocyanatomethylcyclohexan einsetzt.

3. Verfahren gemäß Anspruch 1, dadurch gekennzeichent, daß man als Oligomerisierungskatalysatoren Trialkylphosphine einsetzt.

4. Verfahren gemäß Anspruch 1, dadurch gekennzeichent, daß man als Oligomerisierungskatalysatoren Tributylphosphin und/oder Trioctylphosphin einsetzt.

5. Verfahren gemäß Anspruch 1, dadurch gekennzeichent, daß man die Oligomerisierungsreaktion in Gegenwart von Harnstoffen der allgemeinen Formel **(I)** durchführt, in welcher
R¹, R² und R³ für gleiche oder verschiedenen Reste stehen und jeweils ein Wasserstoffatom oder einen gesättigten oder ungesättigten aliphatischen oder cycloaliphatischen Rest mit bis zu 12 Kohlenstoffatomen bedeuten, und wobei
R¹, R² und R³ auch in Kombination untereinander zusammen mit mindestens einem Stickstoffatom der Harnstoffgruppe und gegebenenfalls einem weiteren Stickstoffatom oder einem Sauerstoffatom heterocyclische Ringe mit 3 bis 6 Kohlenstoffatomen bilden können.

6. Verfahren gemäß Anspruch 1, dadurch gekennzeichent, daß man die Oligomerisierungsreaktion in Gegenwart von Harnstoffen der allgemeinen Formel **(I)** durchführt, in welcher
R¹ für ein Wasserstoffatom und
R² und R³ jeweils für ein Wasserstoffatom oder einen gesättigten aliphatischen oder cycloaliphatischen Rest mit bis zu 8 Kohlenstoffatomen stehen.

7. Verfahren gemäß Anspruch 1, **dadurch gekennzeichnet, daß** man die Oligomerisierungsreaktion in Gegenwart von Amiden der allgemeinen Formel **(II)** durchführt, in welcher
R¹ für ein Wasserstoffatom oder einen gesättigten aliphatischen oder cycloaliphatischen oder einen gegebenenfalls substituierten aromatischen Rest mit bis zu 12 Kohlenstoffatomen steht,
R⁴ die für R¹ angegebene Bedeutung hat oder für einen Rest 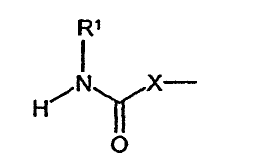 steht, in welchem X einen zweibindigen gegebenenfalls verzweigten aliphatischen oder cycloaliphatischen Rest mit bis zu 6 Kohlenstoffatomen bedeutet und R¹ die angegebene Bedeutung hat, und wobei
R¹ und R⁴ auch zusammen mit dem Stickstoffatom der Amidgruppe und gegebenenfalls einem weiteren Stickstoffatom oder einem Sauerstoffatom heterocyclische Ringe mit 3 bis 6 Kohlenstoffatomen bilden können.

8. Verfahren gemäß Anspruch 1, **dadurch gekennzeichnet, daß** man die Oligomerisierungsreaktion in Gegenwart von Amiden der allgemeinen Formel **(II)** durchführt, in welcher
R¹ für ein Wasserstoffatom oder einen gesättigten aliphatischen Rest mit 1 bis 4 Kohlenstoffatomen und
R⁴ für einen gegebenenfalls substituierten aromatischen Rest mit 1 bis 12 Kohlenstoffatomen steht.

9. Verfahren gemäß Anspruch 1, **dadurch gekennzeichnet, daß** man die Oligomerisierungsreaktion in Gegenwart von Amiden der allgemeinen Formel **(II)** durchführt, in welcher
R¹ und R⁴ zusammen mit dem Stickstoffatom der Amidgruppe und gegebenenfalls einem weiteren Stickstoffatom oder einem Sauerstoffatom einen heterocyclischen Ring mit 3 bis 6 Kohlenstoffatomen bildet
oder in welcher
R¹ für ein Wasserstoffatom und
R⁴ für einen Rest 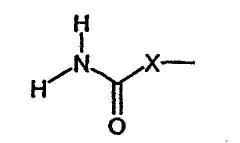 steht, in welchem X einen zweibindigen aliphatischen Rest mit bis zu 4 Kohlenstoffatomen bedeutet.

10. Verfahren gemäß Anspruch 1, dadurch gekennzeichent, daß man die Oligomerisierungsreaktion in Gegenwart von N,N-Dimethylharnstoff und/oder N,N-Diethylharnstoff durchführt.

11. Verfahren gemäß Anspruch 1, **dadurch gekennzeichnet, daß** man die Harnstoffe der allgemeinen Formel **(I)** und/oder Amide der allgemeinen Formel **(II)** in einer Menge von 0,02 bis 2 Gew.-%, bezogen auf das Gesamtgewicht der Ausgangsdiisocyanate, einsetzt.

12. Verfahren gemäß Anspruch 1, **dadurch gekennzeichnet, daß** man die Harnstoffe der allgemeinen Formel **(I)** und/oder Amide der allgemeinen Formel **(II)** in einer Menge von 0,05 bis 1 Gew.-%, bezogen auf das Gesamtgewicht der Ausgangsdiisocyanate, einsetzt.

13. Verwendung der Uretdiongruppen enthaltenden Polyisocyanate gemäß Anspruch 1 als Ausgangskomponente bei der Herstellung von Polyurethankunststoffen.

14. Verwendung der Uretdiongruppen enthaltenden Polyisocyanate gemäß Anspruch 1, gegebenenfalls in mit Blockierungsmitteln blockierter Form, als Vernetzerkomponente für Lackbindemittel oder Lackbindemittelkomponenten mit gegenüber Isocyanatgruppen reaktionsfähigen Gruppen.

## Claims

1. Process for the production of polyisocyanates containing uretdione groups by tertiary-phosphine-catalyzed oligomerization, optionally in the presence of a cocatalyst, of some of the isocyanate groups of diisocyanates having aliphatically and/or cycloaliphatically bonded isocyanate groups, termination of the oligomerization reaction at a desired degree of oligomerization and removal of the unreacted diisocyanate excess by extraction or thin-film distillation, **characterized in that** the oligomerization reaction is carried out in the presence of ureas of the general formula (I) and/or amides of the general formula (II) 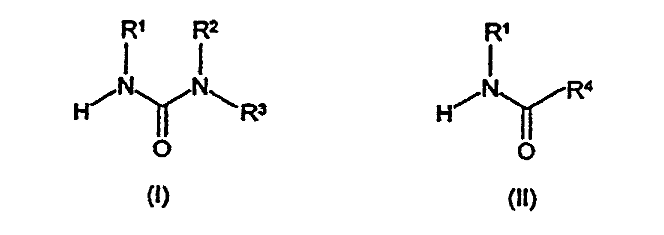 wherein
R¹, R² and R³ represent identical or different radicals and are each a hydrogen atom, a saturated or unsaturated aliphatic or cycloaliphatic, an optionally substituted aromatic or araliphatic radical, which may contain up to 18 carbon atoms and optionally up to 3 hetero atoms selected from oxygen, sulphur and nitrogen,
R⁴ has the meaning given for R¹ to R³ or represents a radical 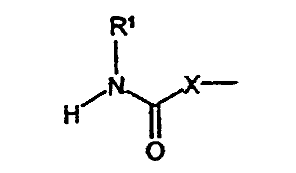 wherein X represents a divalent, optionally branched, aliphatic or cycloaliphatic radical having up to 12 carbon atoms, and R¹ has the meaning given above, and
R¹, R² and R³ in formula (I) and
R¹ and R⁴ in formula (II) may also, in combination with one another together with the nitrogen atoms of the urea group or amide group and optionally a further nitrogen atom or an oxygen atom, form heterocyclic rings having 3 to 6 carbon atoms.

2. Process according to Claim 1, **characterized in that** starting diisocyanates used comprise 1,6-diisocyanatohexane and/or 1-isocyanato-3,3,5-trimethyl-5-isocyanatomethylcyclohexane.

3. Process according to Claim 1, **characterized in that** oligomerization catalysts used comprise trialkylphosphines.

4. Process according to Claim 1, **characterized in that** oligomerization catalysts used comprise tributylphosphine and/or trioctylphosphine.

5. Process according to Claim 1, **characterized in that** the oligomerization reaction is carried out in the presence of ureas of the general formula (I) wherein
R¹, R² and R³ represent identical or different radicals and are each a hydrogen atom or a saturated or unsaturated aliphatic or cycloaliphatic radical having up to 12 carbon atoms and
R¹, R² and R³ may also, in combination with one another together with at least one nitrogen atom of the urea group and optionally a further nitrogen atom or an oxygen atom, form heterocyclic rings having 3 to 6 carbon atoms.

6. Process according to Claim 1, **characterized in that** the oligomerization reaction is carried out in the presence of ureas of the general formula (I) wherein
R¹ represents a hydrogen atom and
R² and R³ each represent a hydrogen atom or a saturated aliphatic or cycloaliphatic radical having up to 8 carbon atoms.

7. Process according to Claim 1, **characterized in that** the oligomerization reaction is carried out in the presence of amides of the general formula (II) wherein
R¹ represents a hydrogen atom or a saturated aliphatic or cycloaliphatic or an optionally substituted aromatic radical having up to 12 carbon atoms,
R⁴ has the meaning given for R¹ or represents a radical 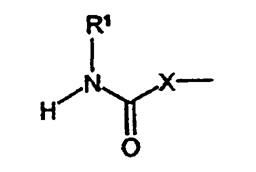 wherein X represents a divalent, optionally branched, aliphatic or cycloaliphatic radical having up to 6 carbon atoms and R¹ has the given meaning, and
R¹ and R⁴ may also, together with the nitrogen atom of the amide group and optionally a further nitrogen atom or an oxygen atom, form heterocyclic rings having 3 to 6 carbon atoms.

8. Process according to Claim 1, **characterized in that** the oligomerization reaction is carried out in the presence of amides of the general formula (II) wherein
R¹ represents a hydrogen atom or a saturated aliphatic radical having 1 to 4 carbon atoms and
R⁴ represents an optionally substituted aromatic radical having 1 to 12 carbon atoms.

9. Process according to Claim 1, **characterized in that** the oligomerization reaction is carried out in the presence of amides of the general formula (II) wherein
R¹ and R⁴, together with the nitrogen atom of the amide group and optionally a further nitrogen atom or an oxygen atom, form a heterocyclic ring having 3 to 6 carbon atoms
or wherein
R¹ represents a hydrogen atom and
R⁴ represents a radical 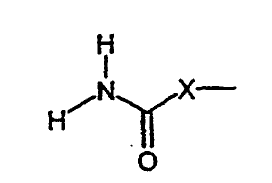 wherein X represents a divalent aliphatic radical having up to 4 carbon atoms.

10. Process according to Claim 1, **characterized in that** the oligomerization reaction is carried out in the presence of N,N-dimethylurea and/or N,N-diethylurea.

11. Process according to Claim 1, **characterized in that** the ureas of the general formula (I) and/or amides of the general formula (II) are used in a quantity of 0.02 to 2 wt.-% based on the overall weight of the starting diisocyanates.

12. Process according to Claim 1, **characterized in that** the ureas of the general formula (I) and/or amides of the general formula (II) are used in a quantity of 0.05 to 1 wt.-% based on the overall weight of the starting diisocyanates.

13. Use of the polyisocyanates containing uretdione groups according to Claim 1 as a starting component in the production of polyurethane plastics.

14. Use of the polyisocyanates containing uretdione groups according to Claim 1, optionally in the form in which they are blocked with blocking agents, as a crosslinker component for paint binders or paint binder components having groups which are reactive towards isocyanate groups.

## Revendications

1. Procédé de préparation de polyisocyanates contenant des groupes uretdione par oligomérisation sous catalyse par phosphines tertiaires, en présence éventuelle d'un co-catalyseur, d'une part des groupes isocyanates de diisocyanates comportant des groupes isocyanates liés à des restes aliphatiques et/ou cycloaliphatiques, interruption de la réaction d'oligomérisation quand est atteint le degré d'oligomérisation requis et élimination par extraction ou distillation en couches minces du reliquat des diisocyanates non transformés, **caractérisé en ce que** la réaction d'oligomérisation a lieu en présence d'urées de formule générale (I) et/ou d'amides de formule générale (II), 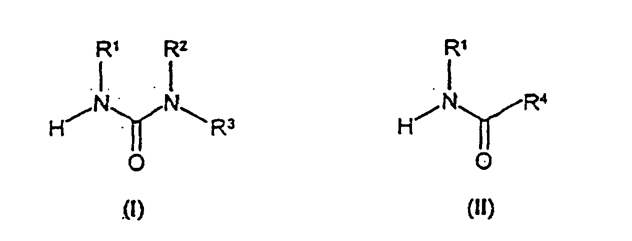 où
R¹, R² et R³ sont des restes identiques ou différents et représentent respectivement un atome d'hydrogène, un reste saturé ou non-saturé aliphatique ou cycloaliphatique, un reste aromatique ou araliphatique éventuellement substitué, pouvant contenir jusqu'à 18 atomes de carbone et éventuellement jusqu'à 3 hétéro-atomes de la série oxygène, soufre, azote;
R⁴ a la même signification que R¹ à R³, ou représente un reste 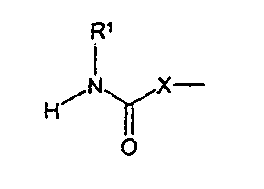 dans lequel X représente un reste aliphatique ou cycloaliphatique bivalent éventuellement ramifié contenant jusqu'à 12 atomes carbone, R¹ ayant la même signification que ci-avant, et
R¹, R² et R³ de la formule (I) ainsi que
R¹ et R⁴ de la formule (II) pouvant se combiner entre eux avec les atomes d'azote des groupes urée ou amide, ainsi qu'éventuellement avec un autre atome d'azote ou un atome d'oxygène pour former des anneaux hétérocycliques comportant de 3 à 6 atomes de carbone.

2. Procédé selon revendication 1, **caractérisé par le fait que** les diisocyanates de base utilisés sont le 1,6-diisocyanatohexane et/ou le 1-isocyanato-3,3,5-trimethyl-5-isocyanatomethylcyclohexane.

3. Procédé selon revendication 1, **caractérisé par le fait que** l'on emploie des trialkylphosphines comme catalyseurs d'oligomérisation.

4. Procédé selon revendication 1, **caractérisé par le fait que** l'on emploie la tributylphosphine et/ou la trioctylphosphine comme catalyseur d'oligomérisation.

5. Procédé selon revendication 1, **caractérisé par le fait que** la réaction d'oligomérisation a lieu en présence d'urées de la formule générale (I), où
R¹, R² et R³ sont des restes identiques ou différents et représentent respectivement un atome d'hydrogène, un reste saturé ou non-saturé aliphatique ou cycloaliphatique, pouvant contenir jusqu'à 12 atomes de carbone et où
R¹, R² et R³ peuvent se combiner entre eux avec au moins un atome d'azote du groupe urée et éventuellement un autre atome d'azote ou un atome d'oxygène pour former des anneaux hétérocycliques comportant de 3 à 6 atomes de carbone.

6. Procédé selon revendication 1, **caractérisé par le fait que** la réaction d'oligomérisation a lieu en présence d'urées de la formule générale (I), où
R¹ représente un atome d'hydrogène et
R² et R³ représentent respectivement un atome d'hydrogène ou un reste saturé aliphatique ou cycloaliphatique comportant jusqu'à 8 atomes de carbone.

7. Procédé selon revendication 1, **caractérisé par le fait que** la réaction d'oligomérisation a lieu en présence d'amides de formule générale (II), où
R¹ représente soit un atome d'hydrogène, soit un reste saturé aliphatique ou cycloaliphatique, ou un reste aromatique éventuellement substitué, pouvant contenir jusqu'à 12 atomes carbone et où
R⁴ a la même signification que R¹, ou représente un reste 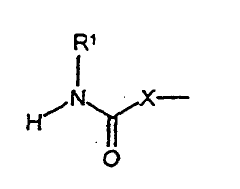 dans lequel X représente un reste aliphatique ou cycloaliphatique bivalent éventuellement ramifié contenant jusqu'à 6 atomes carbone, R¹ ayant la signification ci-avant, et où
R¹ et R⁴ peuvent également se combiner avec l'atome d'azote du groupe amide et éventuellement un autre atome d'azote ou un atome d'oxygène pour former des anneaux hétérocycliques comportant de 3 à 6 atomes de carbone.

8. Procédé selon revendication 1, **caractérisé par le fait que** la réaction d'oligomérisation a lieu en présence d'amides de formule générale (II), où
R¹ représente soit un atome d'hydrogène, soit un reste saturé aliphatique comportant de 1 à 4 atomes carbone et où
R⁴ représente un reste aromatique éventuellement substitué comportant de 1 à 12 atomes carbone.

9. Procédé selon revendication 1, **caractérisé par le fait que** la réaction d'oligomérisation a lieu en présence d'amides de formule générale (II), où
R¹ et R⁴ se combinent avec l'atome d'azote du groupe amide et éventuellement un autre atome d'azote ou un atome d'oxygène pour former des anneaux hétérocycliques comportant de 3 à 6 atomes carbone
ou dans laquelle
R¹ représente un atome d'hydrogène et
R⁴ représente un reste 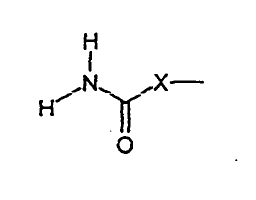 dans lequel X représente un reste aliphatique bivalent comportant jusqu'à 4 atomes carbone.

10. Procédé selon revendication 1, **caractérisé par le fait que** la réaction d'oligomérisation a lieu en présence de N,N-diméthyl-urée et/ou de N,N-diéthylurée.

11. Procédé selon revendication 1, **caractérisé par le fait que** les urées de formule générale (I) et/ou les amides de formule générale (II) sont utilisés à concurrence de 0.02 à 2% en poids par rapport au poids total des diisocyanates de base.

12. Procédé selon revendication 1, **caractérisé par le fait que** les urées de formule générale (I) et/ou les amides de formule générale (II) sont utilisés à concurrence de 0.05 à 1% en poids par rapport au poids total des diisocyanates de base.

13. Utilisation des polyisocyanates contenant des groupes uretdione, selon la revendication 1, comme matières premières pour la fabrication de matières synthétiques de polyuréthanes.

14. Utilisation des polyisocyanates contenant des groupes uretdione, selon la revendication 1, éventuellement sous forme bloquée par des agents bloquants, comme composant de réticulation pour agents liants pour laques ou vernis ou composants pour agents liants pour laques ou vernis, présentant des groupes réactifs aux groupes isocyanates.
